# EUROPEAN PATENT SPECIFICATION

(11) **EP 2 934 949 B1**
(45) Date of publication and mention of the grant of the patent: **07.09.2016**
(21) Application number: 13811558.9
(22) Date of filing: 20.12.2013
(51) Int. Cl.: B60R 9/10

(54) **A CLAMPING DEVICE FOR A BICYCLE RACK**
KLEMMVORRICHTUNG FÜR EIN FAHRRADTRÄGER
DISPOSITIF DE SERRAGE POUR UNE PORTE-BICYCLETTE

(30) Priority: 21.12.2012 BE 201200869
(43) Date of publication of application: 28.10.2015
(73) Proprietor: Yakima Australia Pty Ltd, Brendale, QLD 4520 (AU)
(72) Inventor: SAGAERT, Philip, B-8510 Marke (BE)
(74) Representative: Plas, Axel Ivo Michel
(86) International application number: PCT/EP2013/077659
(87) International publication number: WO 2014/096346

(56) References cited:
- WO-A1-03/106221
- WO-A1-2006/004519
- WO-A1-2009/065817
- DE-A1-102009 039 822
- DE-U1-202006 017 800
- US-A1- 2002 192 015

## Description

The invention relates to a clamping device for attaching a bicycle to a bicycle rack.

A clamp for a bicycle rack of this type is known, for example, from WO2009/065817. However, this clamping device comprises a pivotable clamp for removably attaching the clamping device to the bicycle rack. A part of this pivotable clamp has to be moved partially into and out of the elongate hollow tube when attaching or removing the clamping device. The user cannot carry out such an action in a simple and efficient way. For attachment, the user must first of all take hold of the elongate hollow tube, then move the tightening means along the longitudinal axis, counter to the spring pressure of the clamp, for the purpose of attachment to the bicycle. Then, the user must also, at the same time, correctly position the movable part of the clamp around the frame of the bicycle rack with respect to the hollow tube and hold it in this way in order for this clamp part to be moved into the tube. This gives rise to the risk of the user trapping his fingers between this clamp part and the hollow tube. In addition, this requires the coordination of three simultaneous actions, often at somewhat inaccessible locations, in particular if a number of bicycles need to be attached to the bicycle rack. Moreover, this pivotable clamp can only cope with limited tolerances resulting from wear or deformation to the bicycle rack and/or the clamp, to allow secure clamping to be guaranteed even after long-term use.

An alternative clamping device is known, for example, from DE9214916U. To attach the clamping device to the bicycle rack, this clamping device makes use of a clamp having a fixed clamp part that is attached to the longitudinal end of the hollow tube. In addition, this clamp also comprises a movable clamp part which can be moved along the longitudinal axis by means of the tightening means in the form of a wing nut. A clamp of this type no longer requires the user to have to introduce clamp parts into the hollow tube during attachment of the clamping device. However, in this case too there is a risk of the user trapping his fingers, in particular during fitting of this clamp to the bicycle rack. This is because, as can be seen from the figures, this clamp comprises a longitudinal guide which ensures that the movable clamp part remains aligned with the fixed clamp part. This guide is formed by a curved plate of the movable clamp part, which interacts with a flattened edge of the fixed clamp part. It is clear that this design of the guide brings with it a considerable risk of the user coming into contact with or trapping his fingers between the components of this guide during manipulation of the clamping device, during which the user has to hold the hollow tube and the tightening means.

Consequently, there is a need for a clamping device for a bicycle rack which avoids the abovementioned drawbacks and can therefore be fitted by a user with considerable ease of use and reduced risk of injuries.

A first aspect of the invention provides a clamping device for a bicycle rack, said clamping device comprising:
- an elongate hollow tube comprising:
   - a first longitudinal end and a second longitudinal end;
   - a central longitudinal axis and a cavity;
- a first clamp arranged at the first longitudinal end for removably attaching the clamping device to the bicycle rack;
- a second clamp arranged at the second longitudinal end for removably attaching the clamping device to a bicycle;
- a tightening means which is configured to interact with the first clamp and the second clamp so that the first clamp and the second clamp can both be tightened by said tightening means,
the first clamp comprising:
- a fixed clamp part which is attached to the first longitudinal end;
- a movable clamp part which is configured to be moved along the longitudinal axis with respect to the first longitudinal end by means of the tightening means; and
- a longitudinal guide which is configured in such a way that the movable clamp part remains aligned with the fixed clamp part,
CHARACTERIZED IN THAT
the longitudinal guide is arranged at least partially in the cavity of the tube.

On account of the longitudinal guide being arranged in the cavity of the tube, the risk of a user coming into contact with or being trapped between the components of this guide is greatly reduced.

According to an embodiment, the longitudinal guide extends along the longitudinal axis across a guiding zone which includes the first longitudinal end.

As a result, the guide is arranged close to the first clamp, with the result that the alignment of the movable clamp part and the fixed clamp part can be ensured with a high degree of accuracy.

Preferably, the longitudinal guide comprises a part of the movable clamp part that, transversely to the longitudinal axis, comprises a non-circular cross section which adjoins the fixed clamp part and/or the cavity of the tube.

This allows the guide to be realized in a simple way without having to add complicated or additional components to the clamping device.

According to an optional embodiment, the longitudinal guide comprises a part of the movable clamp part and the fixed clamp part, along the longitudinal axis, in which a respective tongue and/or groove are arranged.

In this way, an accurate longitudinal guide can be realized.

Preferably, the cavity, transversely to the longitudinal axis, comprises a non-circular cross section, such as for example an approximately triangular cross section.

This permits the forces which are produced as a result of a torque about the longitudinal axis on the movable clamp part to be better distributed over the surface of the guide.

According to a further embodiment, the first clamp comprises a limiter which is arranged in the cavity of the tube and which is configured to prevent the guide in the direction of the longitudinal axis from being moved past a limit position in which it is moved all the way out of the cavity.

This prevents the user from having to manipulate the first clamp in order for the guide to be positioned back in the cavity of the tube.

According to an embodiment, the limiter extends in the direction of the longitudinal axis across a limiting zone which is located between the first longitudinal end and the second longitudinal end.

Preferably, the limiter comprises a part of the movable clamp part which, transversely to the longitudinal axis, includes a cross section which in the limit position comes into contact with a projection in the cavity of the tube, optionally the projection is formed by the fixed clamp part.

In this way, the limiter can be realized in a simple manner without the addition of complicated components.

According to a further embodiment, the movable clamp part comprises a connecting part with an attachment for the tightening means which, in the direction of the longitudinal axis, extends:
- through the cavity of the tube;
- past the second longitudinal end;
- through the second clamp; and
- as far as the attachment for the tightening means.

According to one embodiment, the attachment comprises a screw thread on which the tightening means can be arranged by means of a corresponding screw thread.

This permits the first clamp and the second clamp to be operated simultaneously on the side of the second longitudinal end by means of the tightening means, without the user having to carry out any manipulation on the side of the first longitudinal end.

Preferably, the second clamp comprises:
- a first pivotable clamp part which rests against the second longitudinal end of the tube;
- a second pivotable clamp part which rests against the tightening means;
- a pivot which connects the first pivotable clamp part and the second pivotable clamp part pivottably along a pivot axis transverse to the longitudinal axis.

This makes it easy to attach the second clamp to the bicycle and to manipulate it using the same tightening means that is also used to operate the first clamp.

According to a preferred embodiment, the second clamp comprises a spring which is configured to pivot the first pivotable clamp part and the second pivotable clamp part open.

In this way, even when the tightening means is loosened, the first clamp will initially remain clamped in the clamped position on the bicycle rack 2 as a result of the spring pressure. This is advantageous since in many cases the user only wants to open the second clamp in order, for example, to attach the bicycle to the bicycle rack or in order to remove the bicycle from the bicycle rack, without removing the clamping device 1 itself from the bicycle rack.

A second aspect of the invention provides a method for attaching a clamping device according to the first aspect of the invention, characterized in that said method comprises the following steps:
- taking hold of the tube;
- moving the movable clamp part along the longitudinal axis from a closed position to an open position by means of the tightening means;
- attaching the first clamp to the bicycle rack;
- moving the movable clamp part along the longitudinal axis to a clamping position by means of the tightening means.

The invention will now be described further with reference to the drawings, in which:
- Figure 1 shows an embodiment of the clamping device according to the invention in a closed position;
- Figure 2 shows a cross section from figure 1 along the longitudinal axis L;
- Figure 3 shows the clamping device from figure 1 in the closed position, with the tightening means having been unscrewed;
- Figure 4 shows the clamping device from figure 1 in an open position;
- Figures 5 to 7 show a method for attaching the clamping device from figure 1 to a bicycle rack;
- Figure 8 shows a cross section on line VIII-VIII in figure 2;
- Figure 9 shows a cross section similar to figure 8 for an alternative embodiment of the guide.

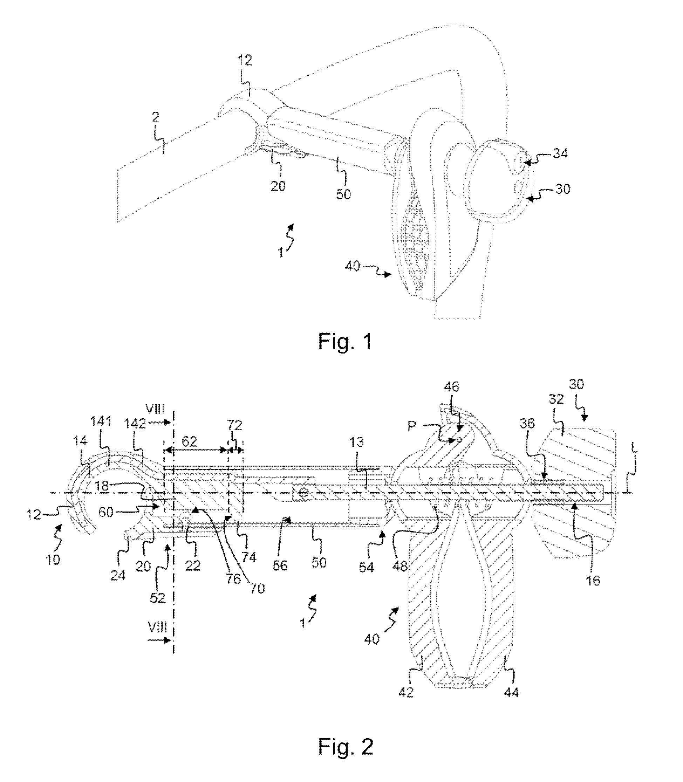

Figures 1 to 8 show an embodiment of the clamping device 1 for a bicycle rack 2 according to the invention in various positions. A bicycle rack 2 of this type comprises, for example, a foldable assembly which can be removably fitted to the towing hook of a vehicle and on which one or more bicycles can be arranged. The clamping device 1 ensures that the bicycles can be fixed to the bicycle rack. In this context, it is necessary for it to be possible for the clamping device 1 to be attached flexibly at various locations on the bicycle rack 2, in order in this way to permit the maximum variety of bicycle models to be clamped in place securely. This clamping device 1 comprises an elongate hollow tube 50, which is delimited on either side by a first longitudinal end 52 and a second longitudinal end 54. The cavity 56 and the longitudinal axis L of this hollow tube 50 can best be seen in the cross section shown in figure 2.

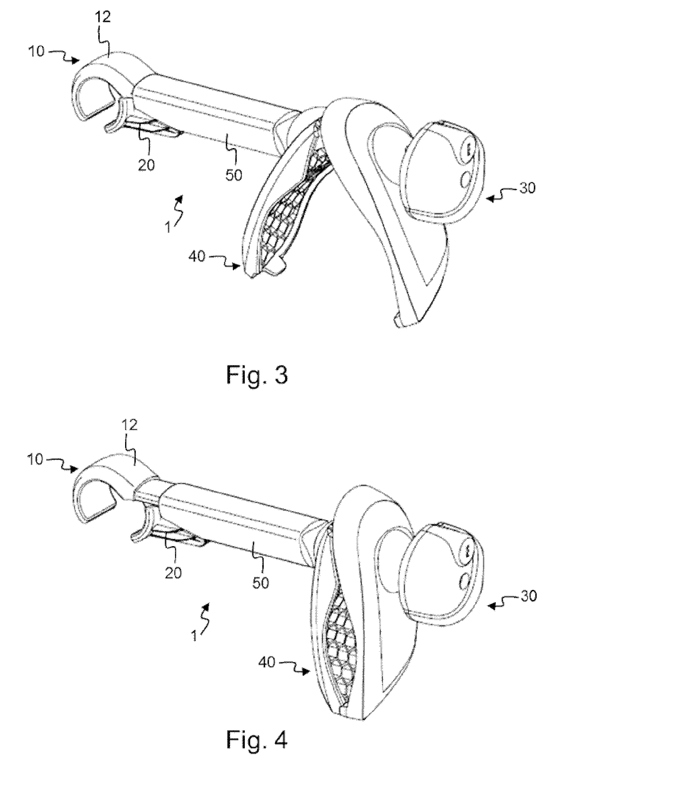

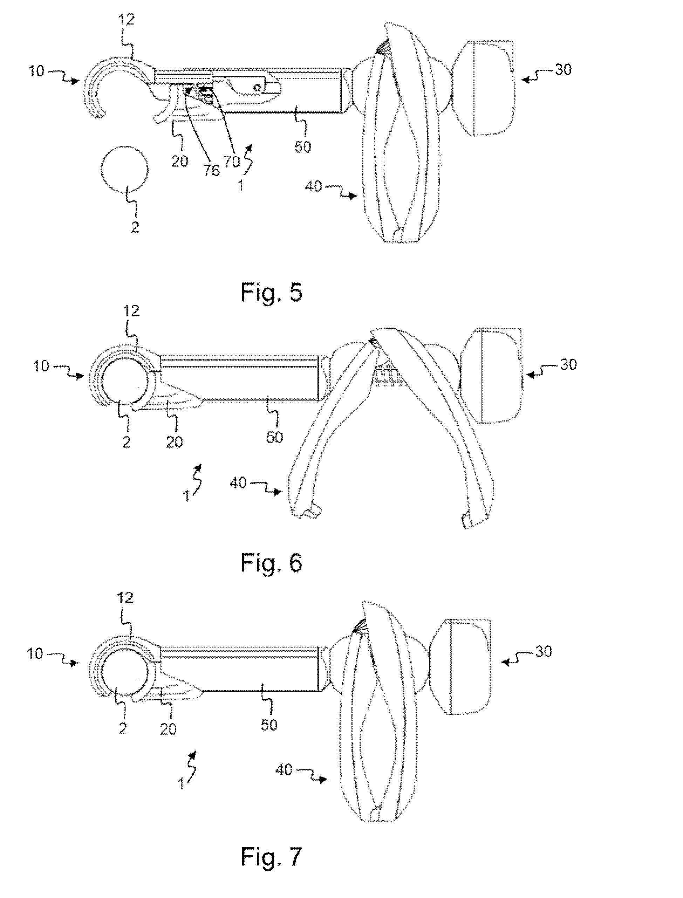

A first clamp 10 is arranged at the first longitudinal end 52 of the hollow tube 50. This first clamp 10 can be used to removably attach the clamping device 1 to the bicycle rack 2. At the second longitudinal end 54 of the hollow tube 50, which is located at the opposite end from the first longitudinal end 52, there is a second clamp 40. This second clamp 40 can be used to removably attach the clamping device 1 to a bicycle when a bicycle is to be attached to the bicycle rack. Both the first clamp 10 and the second clamp 40, as will be described in more detail below, can be tightened by means of a tightening means 30. The first clamp 10 comprises two parts, namely a fixed clamp part 20 and a movable clamp part 12. The fixed clamp part 20 is attached to the first longitudinal end 52 of the hollow tube 50. As can be seen in figure 2, according to the present embodiment this fixed clamp part 20 is attached by means of a rivet 22, but it will be clear that it is also possible to use any other suitable attachment means, such as for example a screw connection, a bolt connection, a bonded connection, etc. in order to attach the fixed clamp part 20 to the longitudinal end 52 of the hollow tube 50. As can be seen, this fixed clamp part 20 comprises a contact element 24 for the bicycle rack 2, which in the present embodiment is designed as a segment of a circle. However, this is not a requirement, any other suitable form of this contact surface is possible, provided that it can adjoin a part of the periphery of the bicycle rack 2 to which the clamping device 1 is to be attached. At the longitudinal end 52, the fixed clamp part 20 interacts with the movable clamp part 12. This movable clamp part 12 comprises a hook-shaped contact element 14 for the bicycle rack 2 and can be moved along the longitudinal axis L, with respect to the longitudinal end 52, from a closed position shown in figure 1 to an open position as shown in figures 4 and 5 and to a clamping position as shown in figures 6 and 7. The movement of the movable clamp part 12 is made possible by the tightening means 30. For this purpose, the movable clamp part 12, as can be seen in the cross section shown in figure 3, comprises a connecting part 13. This connecting part 13 is designed as a shaft which is connected to the hook-shaped contact element 14 and which extends along the longitudinal axis L through the cavity 56 of the tube 50 to beyond the second longitudinal end 54, then through the second clamp 40 and finally as far as an attachment 16 for the tightening means 30. This attachment 16 for the tightening means 30 is formed as a piece of the connecting part 13 which is provided with a screw thread on which the tightening means can be fitted by means of an internal screw 36 provided with a corresponding screw thread. By being screwed in or out, the tightening means 30 can be moved in the longitudinal direction L on this attachment 16. It will be clear at the closed position shown in figure 1 is reached when the tightening means 30 has been screwed as far as possible onto the attachment 16 and is thus located as close as possible to the second end 54 of the tube. As a result, the second clamp 40 is held in a closed position between the tightening means 30 and this second end. In the same way, the movable clamp part 12 of the first clamp, together with its hook-shaped contact element 14, is moved into a limit position at the first end 52 of the tube 50. The tightening means 30 also comprises a knob 32 which is connected to the screw element 36 and allows a user to turn the screw element 36 by hand. As can be seen, the knob 32 also includes an optional slot 34, which if desired can prevent the knob from turning. One reason for this is to permit secure attachment of the bicycles to the bicycle rack 2 during transport, and another reason is to prevent, for example, theft of the bicycles present on the bicycle rack 2 when unattended.

As can be seen in the cross section shown in figure 2, the second clamp 40 comprises two pivotable clamp parts 42, 44 which are connected to one another by means of a pivot 46 having a pivot axis P transverse to the longitudinal axis L. The first pivotable clamp part 42 rests against the second longitudinal end 54 of the tube 50. On the other side, the second pivotable clamp part 44 rests against the tightening means 30. A spring 48 is arranged between the two pivotable clamp parts 42, 44. This coiled compression spring 48 is arranged in such a way that it exerts a force that attempts to pivot open the two pivotable clamp parts 42, 44. The coiled compression spring 48 is arranged around the connecting part 13 in order for this spring 48 to be held in place in the second clamp 40 in a simple manner. It will be clear that any other suitable type of attachment of the spring is also possible, as are other suitable types of springs as well as the spring 48 shown in the embodiment of figure 3, provided that the spring 48 is fitted in such a way as to pivot open the two pivotable clamp parts 42, 44. One of the possible alternatives is, for example, to fit a torsion spring at the pivot 46.

When the tightening means 30 is unscrewed from the closed position shown in figure 2, the spring 48 will ensure that the two pivotable clamp parts 42, 44 of the second clamp 40 will pivot open, as shown in figure 3. Once the tightening means has been sufficiently unscrewed, the movable clamp part 12 of the first clamp 10 can be moved along the longitudinal axis L to the open position shown in figure 4. For this purpose, the user takes hold of the tube 50 in one hand and uses his other hand to push the tightening means 30 along the longitudinal axis L in the direction of the tube 50. This will ensure that the pivotable clamp parts 42, 44 are moved towards their closed position, counter to the pressure of the spring 48. At the same time, the tightening means, by means of the connecting part 13, will move the hook-shaped contact element 14 of the movable clamp part 12 away from the first end 52 of the tube 50 in the direction of the longitudinal axis L. In this way, the first clamp 10 will reach its open position in which, as shown in figures 4 and 5, the first clamp 10 can be easily attached to the bicycle rack 2. Once the bicycle rack 2 is present inside the open first clamp 10, the user can release the force exerted on the tightening means 30. At that time, the spring 48 will force the pivotable clamp parts 42, 44 of the second clamp 40 back into an open position and in the process move the tightening means 30 away from the second end 54 of the tube 50 in the direction of the longitudinal axis L; in so doing, the hook-shaped contact element 14, via the connecting part 13, will be moved into and held in the clamped position as shown in figure 6. After the bicycle has optionally been placed in the open second clamp 40, the second clamp 40 can also be moved into the clamped-shut position shown in figure 7 as a result of the tightening means 30 being screwed in again.

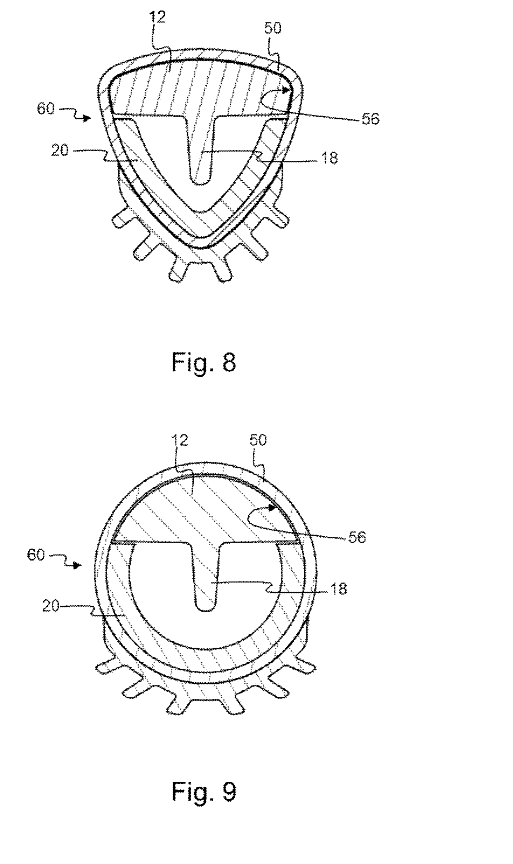

As shown in the cross sections from figures 2 and 8, the hook-shaped contact element 14 of the movable clamp part 12 is connected to a longitudinal guide 60. This longitudinal guide 60 extends over a guiding zone 62 in the direction of the longitudinal axis L at the first longitudinal end 52. As will be described in more detail, this longitudinal guide 60 ensures that the movable clamp part 12 always remains aligned with the fixed clamp part 20 in its various positions. As can be seen, this longitudinal guide 60 has been at least partially fitted in the cavity 56 of the tube 50, thus preventing the user from coming into contact with the longitudinal guide 60 when taking hold of the tube 50, and thus also preventing, for example, the user's fingers from becoming trapped. The longitudinal guide 60 according to the exemplary embodiment illustrated is realized in a simple way by means of the approximately triangular cross section of the cavity 56 of the tube 50 which, as can be seen in the cross section shown in figure 4, adjoins the cross section of the movable clamp part 12 and the fixed clamp part 20. As can be seen, the fixed clamp part 20 comprises an approximately V-shaped cross section which fills the bottom point of the cavity 56. The movable clamp part 12 is to a certain extent complementary to this cross section of the fixed clamp part 20 and adjoins the approximately trapezium-shaped cross section of the cavity 56 at the contact surfaces. The cross section of the movable clamp part 12, as shown in figure 8, is approximately constant over the entire length of the guiding zone 62. It will be clear that in this way the guide 60 makes it possible for the movable clamp part to be moved over the length of the guiding zone 62 along the longitudinal axis L without the movable clamp part 12 being able to rotate about this longitudinal axis L with respect to the fixed clamp part 20, since the cross section of the movable clamp part 12 adjoins the cross section of the cavity 56 and the fixed clamp part 20 in the manner illustrated. In this way, the movable clamp part 12 remains aligned with the fixed clamp part 20 without the longitudinal guide giving rise to any risk of contact or trapping when the user is manipulating the tube 50. As can also be seen in figures 2 and 8, the cross section of the movable clamp part 12 comprises a tongue 18. According to a variant embodiment (not shown), this tongue 18 can interact with a corresponding groove arranged in the fixed clamp part 20. This optional tongue 18 and/or groove can provide an additional contact surface for the guide 60 in order to ensure alignment of the fixed clamp part 20 and the movable clamp part 12. It will be clear that a wide variety of cross sections of the fixed clamp part 20, the movable clamp part 12 and the cavity 56 are possible in order to realize the guidance. To realize secure alignment, all that is important is that the part of the movable clamp part 12, in particular in the guiding zone 62, comprises a non-circular cross section which adjoins the fixed clamp part 20 and/or the cavity 56 of the tube 50. Although it would be possible to realize the guidance even with a circular cross section of the cavity 56, as shown in figure 9, it is preferable to use a cavity 56 with a non-circular cross section, since the forces which are generated as a result of torques exerted about the longitudinal axis L on the movable clamp part 12 are then better distributed over the surface of the movable clamp part 12 adjoining the cavity 56.

Furthermore, as can be seen in the cross section from figure 2 and in the partial cross section of figure 5, the guiding zone 62 of the first clamp 120 is adjoined by a limiting zone 72 which comprises a limiter 70. This limiter 70 is also arranged in the cavity 56 of the tube 50 and limits the movement of the guide 60 in the direction of the longitudinal axis L, in order to prevent the guide from potentially moving past a limit position all the way out of the cavity 56. According to this exemplary embodiment, the limiter 70 is formed by a part of the movable clamp part 12 which, transversely to the longitudinal axis L, comprises a stop rib having a cross section 74, which in the limit position comes into contact with a projection 76 in the cavity 56 of the tube 50. As shown in figure 3, the cross section 74 of the stop rib approximately corresponds to the cross section of the cavity 56, and the projection 76, as can be seen from the partial cross section of figure 5, is formed by a corresponding stop rib 76 of the fixed clamp part 20, which projects into the cavity 56. According to an alternative embodiment, in which, by way of example, the fixed clamp part 20 shown in figure 3 is attached to the tube by means of a bonded connection, the projection 76 is formed by an alternative part of this fixed clamp part 20 which is located in the cavity 56. It will be clear that numerous alternative embodiments are conceivable, and it is not even a requirement that the limiter 70 be fitted to the guide 60. However, it is preferable for this limiter 70 also to be arranged between the two longitudinal ends 52, 54 in the cavity 56 of the tube 50, in order in this way also to reduce the risk of contact during manipulation of the tube 50.

Furthermore, it can also be seen in the cross section that the hook-shaped contact element 14 of the movable clamp part 12 is designed as an assembly of a metal hook shape 141 encapsulated by a plastic molding 142, which also gives shape to the guiding zone 62 and the limiting zone 72. The metal hook shape 141 is connected to the connecting part 13 via a suitable connection, such as a bolt connection, screw connection, soldered connection, rivet connection, etc. This permits the hook-shaped element 14 to be formed with a sufficiently high strength, so that it is able to withstand the forces which are generated during tightening of the clamping device 1, while also allowing the desired cross sections for the guiding zone 62 and the limiting zone 72 to be realized in a simple and flexible way. It will be clear that various embodiments are possible, wherein the hook-shaped element 14 is for example made completely from metal or from plastic, or wherein for example the hook-shaped element 14 and the connecting element 13 are constructed as a single unit.

Finally, it is also advantageous, as shown in figure 7, for the hook-shaped contact elements 14, 24, even in the clamping position, not to completely enclose the bicycle rack 2, shown here in the form of a round tube, which can be achieved by omitting a segment of the circumference. This allows tolerances and deformations with respect to the theoretical dimensioning of the bicycle rack 2 and/or the hook-shaped contact elements 14, 24 to be absorbed without problems. It will be clear that the first hook can easily be clamped to a tube of the bicycle rack 2, even if the radius of the tube is locally somewhat larger than expected as a result of tolerances. Moreover, in the event that the circumference of the tube of the bicycle rack 2 is for example locally somewhat dented, resulting in a circumference that is smaller than the original circumference, here too the first clamp 10 can be tightened without problems, since the segment that is not surrounded by the hook-shaped contact elements 14, 24 permits the hook-shaped contact element 14 of the movable clamp part 12 to be moved further in the direction of the hook-shaped contact element 24, in the direction of the longitudinal direction L, than in the case of a completely closed circumference.

It will be clear that numerous variant embodiments are possible without departing from the scope of protection of the invention as defined by the claims.

## Claims

1. A clamping device (1) for a bicycle rack (2), said clamping device (1) comprising:
- an elongate hollow tube (50) comprising:
- a first longitudinal end (52) and a second longitudinal end (54);
- a central longitudinal axis (L) and a cavity (56);
- a first clamp (10) arranged at the first longitudinal end (52) for removably attaching the clamping device (1) to the bicycle rack (2);
- a second clamp (40) arranged at the second longitudinal end (54) for removably attaching the clamping device (1) to a bicycle;
- a tightening means (30) which is configured to interact with the first clamp (10) and the second clamp (40) so that the first clamp (10) and the second clamp (20) can both be tightened by said tightening means (30),
the first clamp (10) comprising:
- a fixed clamp part (20) which is attached to the first longitudinal end (52);
- a movable clamp part (12) which is configured to be moved along the longitudinal axis (L) with respect to the first longitudinal end (52) by means of the tightening means (30); and
- a longitudinal guide (60) which is configured in such a way that the movable clamp part (12) remains aligned with the fixed clamp part (20),
**CHARACTERIZED IN THAT**
the longitudinal guide (60) is arranged at least partially in the cavity (56) of the tube (50).

2. A device as claimed in claim 1, **characterized in that** the longitudinal guide (60) extends along the longitudinal axis (L) across a guiding zone (62) which includes the first longitudinal end (52).

3. A device as claimed in at least one of the preceding claims, **characterized in that** the longitudinal guide (60) comprises a part of the movable clamp part (12) that, transversely to the longitudinal axis (L), comprises a non-circular cross section which adjoins the fixed clamp part (20) and/or the cavity (56) of the tube (50).

4. A device as claimed in at least one of the preceding claims, **characterized in that** the longitudinal guide (60) comprises a part of the movable clamp part (12) and the fixed clamp part (20), along the longitudinal axis (L), in which a respective tongue (18) and/or groove are arranged.

5. A device as claimed in at least one of the preceding claims, **characterized in that** the cavity (56), transversely to the longitudinal axis (L), comprises a non-circular cross section.

6. A device as claimed in claim 5 **characterized in that** the cavity (56), transversely to the longitudinal axis (L), comprises an approximately triangular cross section.

7. A device as claimed in at least one of the preceding claims, **characterized in that** the first clamp (10) comprises a limiter (70) which is arranged in the cavity (56) of the tube (50) and which is configured to prevent the guide (60) in the direction of the longitudinal axis (L) from being moved past a limit position in which it is moved all the way out of the cavity (56).

8. A device as claimed in claim 7, **characterized in that** the limiter (70) extends in the direction of the longitudinal axis across a limiting zone (72) which is located between the first longitudinal end (52) and the second longitudinal end (54).

9. A device as claimed in claim 8, **characterized in that** the limiter (70) comprises a part of the movable clamp part (12) which, transversely to the longitudinal axis (L), includes a cross section (74) which in the limit position comes into contact with a projection (76) in the cavity (56) of the tube (50).

10. A device as claimed in claim 9, **characterized in that** the projection (76) is formed by the fixed clamp part (20).

11. A device as claimed in at least one of the preceding claims, **characterized in that** the movable clamp part (12) comprises a connecting part (13) with an attachment for the tightening means (30) which, in the direction of the longitudinal axis (L), extends:
- through the cavity (56) of the tube (50);
- past the second longitudinal end (54);
- through the second clamp (40); and
- as far as the attachment (16) for the tightening means (30).

12. A device as claimed in claim 11, **characterized in that** the attachment (16) comprises a screw thread on which the tightening means (30) can be arranged by means of a corresponding screw thread.

13. A device as claimed in at least one of the preceding claims, **characterized in that** the second clamp (40) comprises:
- a first pivotable clamp part (42) which rests against the second longitudinal end (54) of the tube (50);
- a second pivotable clamp part (44) which rests against the tightening means (30);
- a pivot (46) which connects the first pivotable clamp part (42) and the second pivotable clamp part (44) pivottably along a pivot axis (P) transverse to the longitudinal axis.

14. A device as claimed in claim 13, **characterized in that** the second clamp (40) further comprises comprises a spring (48) which is configured to pivot the first pivotable clamp part (42) and the second pivotable clamp part (44) open.

15. A method for attaching a clamping device (1) as claimed in at least one of the preceding claims, **characterized in that** said method comprises the following steps:
- taking hold of the tube (50);
- moving the movable clamp part (12) along the longitudinal axis (L) from a closed position to an open position by means of the tightening means (30);
- attaching the first clamp (10) to the bicycle rack (2);
- moving the movable clamp part (12) along the longitudinal axis (L) to a clamping position by means of the tightening means (30).

## Patentansprüche

1. Ein Klemmvorrichtung (1) für einen Fahrradrahmen (2), welche Klemmvorrichtung (1) aufweist:
- Ein längliches hohles Rohr (50), aufweisend:
- Ein erstes Längsende (52) und ein zweites Längsende (54);
- Eine zentrale Längsachse (L) und einen Hohlraum (56);
- Eine an dem ersten Längsende (52) angeordnete erste Klemme (10), um die Klemmvorrichtung (1) lösbar an dem Fahrradrahmen (2) zu befestigen;
- Eine an dem zweiten Längsende (54) angeordnete zweite Klemme (40), um die Klemmvorrichtung (1) lösbar an einem Fahrrad zu befestigen;
- Ein Festziehmittel (30), das eingerichtet ist, um derart mit der ersten Klemme (10) und der zweiten Klemme (40) zusammenzuwirken, dass sowohl die erste Klemme (10) als auch die zweite Klemme (20) von dem genannten Festziehmittel (30) festgezogen werden können,
welche erste Klemme (10) aufweist:
- Ein fixiertes Klemmenteil (20), das an dem ersten Längsende (52) befestigt ist;
- Ein bewegliches Klemmenteil (12), das eingerichtet ist, um mittels des Festziehmittels (30) entlang der Längsachse (L) bezüglich des ersten Längsendes (52) bewegt zu werden; und
- Eine Längsführung (60), die auf eine solche Weise eingerichtet ist, dass das bewegliche Klemmenteil (12) mit dem fixierten Klemmenteil (20) ausgerichtet bleibt,
**DADURCH GEKENNZEICHNET, DASS**
die Längsführung (60) mindestens teilweise in dem Hohlraum (56) des Rohrs (50) angeordnet ist.

2. Eine Vorrichtung wie in Anspruch 1 beansprucht, **dadurch gekennzeichnet, dass** die Längsführung (60) sich entlang der Längsachse (L) über eine Führungszone (62), welche das erste Längsende (52) umfasst, erstreckt.

3. Eine Vorrichtung wie in mindestens einem der voranstehenden Ansprüche beansprucht, **dadurch gekennzeichnet, dass** die Längsführung (60) einen Teil des beweglichen Klemmenteils (12) aufweist, der quer zu der Längsachse (L) einen nicht-kreisförmigen Querschnitt aufweist, der an das fixierte Klemmenteil (20) und oder den Hohlraum (56) des Rohrs (50) angrenzt.

4. Eine Vorrichtung wie in mindestens einem der voranstehenden Ansprüche beansprucht, **dadurch gekennzeichnet, dass** die Längsführung (60) einen Teil des beweglichen Klemmenteils (12) des fixierten Klemmenteils (20) entlang der Längsachse (L) aufweist, in welchen eine entsprechende Zunge (18) und/oder Nut angeordnet sind.

5. Eine Vorrichtung wie in mindestens einem der voranstehenden Ansprüche beansprucht, **dadurch gekennzeichnet, dass** der Hohlraum (56) quer zu der Längsachse (L) einen nicht-kreisförmigen Querschnitt aufweist.

6. Eine Vorrichtung wie in Anspruch 5 beansprucht, **dadurch gekennzeichnet, dass** der Hohlraum (56) quer zu der Längsachse (L) einen ungefähr dreieckigen Querschnitt aufweist.

7. Eine Vorrichtung wie in mindestens einem der voranstehenden Ansprüche beansprucht, **dadurch gekennzeichnet, dass** die erste Klemme (10) einen Begrenzer (70) aufweist, der in dem Hohlraum (56) des Rohrs (50) angeordnet ist und der eingerichtet ist, um zu verhindern, dass die Führung (60) in der Richtung der Längsachse (L) über eine Begrenzungsposition, in welcher sie gänzlich aus dem Hohlraum (56) heraus bewegt ist, hinaus bewegt wird.

8. Eine Vorrichtung wie in Anspruch 7 beansprucht, **dadurch gekennzeichnet, dass** der Begrenzer (70) sich in der Richtung der Längsachse über eine Begrenzungszone (72) erstreckt, welche sich zwischen dem ersten Längsende (52) und dem zweiten Längsende (54) befindet.

9. Eine Vorrichtung wie in Anspruch 8 beansprucht, **dadurch gekennzeichnet, dass** der Begrenzer (70) einen Teil des beweglichen Klemmenteils (12) aufweist, welcher, quer zu der Längsachse (L),einen Querschnitt (74) umfasst, welcher in der Begrenzungsposition in Berührung mit einem Vorsprung (76) in dem Hohlraum (56) des Rohrs (50) kommt.

10. Eine Vorrichtung wie in Anspruch 9 beansprucht, **dadurch gekennzeichnet, dass** der Vorsprung (76) von dem fixierten Klemmenteil (20) gebildet wird.

11. Eine Vorrichtung wie in mindestens einem der voranstehenden Ansprüche beansprucht, **dadurch gekennzeichnet, dass** das bewegliche Klemmenteil (12) ein Verbindungsteil (13) mit einer Befestigung für die Festziehmittel (30) aufweist, welches sich in der Richtung der Längsachse (L) wie folgt erstreckt:
- Durch den Hohlraum (56) des Rohrs (50);
- Über das zweite Längsende (54) hinaus;
- Durch die zweite Klemme (40); und
- So weit wie die Befestigung (16) für das Festziehmittel (30).

12. Eine Vorrichtung wie in Anspruch 11 beansprucht, **dadurch gekennzeichnet, dass** die Befestigung (16) ein Schraubengewinde aufweist, auf welchem das Festziehmittel (30) mittels eines entsprechenden Schraubengewindes angeordnet werden kann.

13. Eine Vorrichtung wie in mindestens einem der voranstehenden Ansprüche beansprucht, **dadurch gekennzeichnet, dass** die zweite Klemme (40) aufweist:
- Ein erstes schwenkbares Klemmenteil (42), welches gegen das zweite Längsende (54) des Rohrs (50) lehnt;
- Ein zweites schwenkbares Klemmenteil (44), welches gegen das Festziehmittel (30) lehnt;
- Ein Schwenkgelenk (46), welches das erste schwenkbare Klemmenteil (42) und das zweite schwenkbare Klemmenteil (44) schwenkbar entlang einer Schwenkachse (P) verbindet, die senkrecht zu der Längsachse ist.

14. Eine Vorrichtung wie in Anspruch 13 beansprucht, **dadurch gekennzeichnet, dass** die zweite Klemme (40) ferner eine Feder (48) aufweist, die eingerichtet ist, um das erste schwenkbare Klemmenteil (42) und das zweite schwenkbare Klemmenteil (44) aufzuschwenken.

15. Ein Verfahren zum Befestigen einer Klemmvorrichtung (1) wie in mindestens einem der voranstehenden Ansprüche beansprucht, **dadurch gekennzeichnet, dass** das genannte Verfahren die folgenden Schritte aufweist:
- Ergreifen des Rohrs (50);
- Bewegen des beweglichen Klemmenteils (12) entlang der Längsachse (L) von einer geschlossenen Position in eine offene Position mittels des Festziehmittels (30).
- Befestigen der ersten Klemme (10) an dem Fahrradrahmen (2);
- Bewegen des beweglichen Klemmenteils (12) entlang der Längsachse (L) in eine Klemmposition mittels des Festziehmittels (30).

## Revendications

1. Dispositif de serrage (1) pour un porte-vélos (2), ledit dispositif de serrage (1) comprenant :
- un tube creux allongé (50) comprenant :
- une première extrémité longitudinale (52) et une seconde extrémité longitudinale (54) ;
- un axe longitudinal central (L) et une cavité (56) ;
- une première pince (10) disposée à la première extrémité longitudinale (52) pour fixer de manière amovible le dispositif de serrage (1) au porte-vélos (2) ;
- une seconde pince (40) disposée à la seconde extrémité longitudinale (54) pour fixer de manière amovible le dispositif de serrage (1) à un vélo ;
- un moyen de serrage (30) qui est configuré pour interagir avec la première pince (10) et la seconde pince (40) de sorte que la première pince (10) et la seconde pince (20) puissent être toutes deux serrées par ledit moyen de serrage (30),
la première pince (10) comprenant :
- une partie de pince fixe (20) qui est fixée à la première extrémité longitudinale (52) ;
- une partie de pince mobile (12) qui est configurée pour être déplacée le long de l'axe longitudinal (L) par rapport à la première extrémité longitudinale (52) au moyen du moyen de serrage (30) ; et
- un guide longitudinal (60) qui est configuré d'une manière telle que le partie de pince mobile (12) reste alignée avec la partie de pince fixe (20),
**CARACTERISE EN CE QUE**
le guide longitudinal (60) est disposé au moins partiellement dans la cavité (56) du tube (50).

2. Dispositif selon la revendication 1, **caractérisé en ce que** le guide longitudinal (60) s'étend le long de l'axe longitudinal (L) au travers d'une zone de guidage (62) qui inclut la première extrémité longitudinale (52).

3. Dispositif selon au moins une des revendications précédentes, **caractérisé en ce que** le guide longitudinal (60) comprend une partie de la partie de pince mobile (12) qui, transversalement à l'axe longitudinal (L), comprend une section transversale non circulaire qui joint la partie de pince fixe (20) et/ou la cavité (56) du tube (50).

4. Dispositif selon au moins une des revendications précédentes, **caractérisé en ce que** le guide longitudinal (60) comprend une partie de la partie de pince mobile (12) et la partie de pince fixe (20), le long de l'axe longitudinal (L), dans lequel une languette (18) et/ou une rainure respectives sont disposées.

5. Dispositif selon au moins une des revendications précédentes, **caractérisé en ce que** la cavité (56), transversalement à l'axe longitudinal (L), comprend une section transversale non circulaire.

6. Dispositif selon la revendication 5, **caractérisé en ce que** la cavité (56) transversalement à l'axe longitudinal (L) comprend une section transversale non circulaire.

7. Dispositif selon au moins une des revendications précédentes, **caractérisé en ce que** la première pince (10) comprend un limiteur (70) qui est disposé dans la cavité (56) du tube (50) et qui est configurée pour empêcher que le guide (60) soit déplacé dans la direction de l'axe longitudinal (L) au-delà d'une position limite, dans laquelle il est déplacé hors de la cavité (56).

8. Dispositif selon la revendication 7, **caractérisé en ce que** le limiteur (70) s'étend dans la direction de l'axe longitudinal au travers d'une zone de limitation (72) qui est située entre la première extrémité longitudinale ((52) et la seconde extrémité longitudinale (54).

9. Dispositif selon la revendication 8, **caractérisé en ce que** le limiteur (70) comprend une partie de la partie de pince mobile (12) qui, transversalement à l'axe longitudinal (L), inclut une section transversale (74), qui dans la position limite vient en prison avec une protubérance (76) dans la cavité (56) du tube (50).

10. Dispositif selon la revendication 9, **caractérisé en ce que** la protubérance (76) est formée par la partie de pince fixe (20).

11. Dispositif selon au moins une des revendications précédentes, **caractérisé en ce que** la partie de pince mobile (12) comprend une partie de raccordement (13) avec une fixation pour le moyen de serrage (30) qui, dans la direction de l'axe longitudinal (L), s'étend :
- à travers la cavité (56) du tube (50) ;
- au-delà de la seconde extrémité longitudinale (54) ;
- à travers la seconde pince (40) ; et
- aussi loin que la fixation (16) pour le moyen de fixation (30).

12. Dispositif selon la revendication 11, **caractérisé en ce que** la fixation (16) comprend un filetage de vis sur lequel le moyen de serrage (30) peut être disposé au moyen d'un filetage de vis correspondant.

13. Dispositif selon au moins une des revendications précédentes, **caractérisé en ce que** la seconde pince (40) comprend :
- une première partie de pince pivotante (42) qui repose contre la seconde extrémité longitudinale (54) du tube (50) ;
- une seconde partie de pince pivotante (44) qui repos contre le moyen de serrage (30) ;
- un pivot (46) qui raccorde la première partie de pince pivotante (42) et la seconde partie de pince pivotante (44) pivotante le long d'un axe de pivot (P) transversalement à l'axe longitudinal.

14. Dispositif selon la revendication 13, **caractérisé en ce que** la seconde pince (40) comprend en outre un ressort (48) qui est configuré pour pivoter la première partie de pince pivotante (42) et la seconde partie de pince pivotante (44) en position ouvert.

15. Procédé de fixation d'un dispositif de serrage (1) selon au moins une des revendications précédentes, **caractérisé en ce que** ledit procédé comprend les étapes suivantes:
- maintenir le tube (50) ;
- déplacer la partie de pince mobile (12) le long de l'axe longitudinal (L) d'une position ouverte à une position ouverte au moyen du moyen de serrage (30) ;
- fixer la première pince (10) au porte-vélos (2) ;
- déplacer la partie de pince mobile (12) le long de l'axe longitudinal (L) en une position de serrage au moyen du moyen de serrage (30).
